# EUROPEAN PATENT SPECIFICATION

(11) **EP 2 801 671 B1**
(45) Date of publication and mention of the grant of the patent: **05.09.2018**
(21) Application number: 14173749.4
(22) Date of filing: 07.06.2012
(51) Int. Cl.: E02F 3/96

(54) **A jaw assembly for a demolition tool**
Backenbaugruppe für ein Abbruchwerkzeug
Ensemble de mâchoire pour outil de démolition

(43) Date of publication of application: 12.11.2014
(62) Divisional of application: 12171215.2
(73) Proprietor: Caterpillar Work Tools B. V., 5232 BJ 's-Hertogenbosch (NL)
(72) Inventor: VAN GEMERT, John, 5451 BT MILL (NL)
(74) Representative: BRP Renaud & Partner mbB Rechtsanwälte Patentanwälte Steuerberater

(56) References cited:
- AT-U1- 9 148
- DE-A1-102006 019 069
- US-A- 5 474 242
- US-A1- 2011 031 338

## Description

### Technical Field

This disclosure relates to the field of demolition tools for crushing and/or cutting material and more particularly to the field of replaceable working parts for demolition tools.

### Background

A demolition tool for crushing and/ or cutting material is generally known. Typically, the demolition tool may comprise a jaw assembly having a lower jaw and an upper jaw. The upper and lower jaws may be pivotally connected. The upper and lower jaws may be moveable relative to each other. Blades may be provided on both the upper jaw and the lower jaw. The work material may be crushed or cut by closing the upper jaw and the lower jaw under hydraulic pressure.

The demolition tool may comprise a frame that connects the jaw set to a jib of a machine.

The demolition tool may have a jaw assembly that is suitable for crushing concrete. The jaw assembly may be adapted for crushing or cutting other materials, for example for cutting scrap iron and/or iron sections. The abrasive nature or hardness of some of these materials may cause the relatively rapid wear of the surfaces that engage the materials.

The demolition tool may be provided with replaceable working parts that have wear surfaces. The working part may be connected directly to the jaw assembly by conventional techniques. The working part may be provided on the upper and/ or the lower jaw. The working part may be retained by fasteners.

US5474242 discloses a replaceable blade assembly for securing tool blades to the jaws of a material handler and comprises a holder secured to the jaw and a blade insert which is releasably secured thereto. The holder has a face with an elongated intermediate portion, an inclined end portion adjacent its outer end, a channel extending along the elongated intermediate portion, and a recess in the inclined end portion. The blade insert has a first face for mounting against the face of the holder with an elongated intermediate portion bearing against the elongated intermediate portion of the holder. An inclined end portion adjacent the outer end of the blade insert bears against the inclined end portion of the holder.

US2011031338 discloses a blade set associated with jaws having a bottom blade associated with a bottom jaw and a top blade associated with a top jaw. The bottom blade includes two spaced-apart support rails separated by a cavity, while the top blade includes a single raised knife rail positioned and central to the cavity. The raised support rails associated with the bottom blade and the raised knife rail associated with the top blade have spaced recesses across their width.

AT9148 discloses a demolition jaw having a first and second jaws. The first jaw has cutting parts on a measuring element that can be inserted in a receiving recess provided on the first jaw. The measuring element has mounting apertures which form a common passage with mounting passages, in which the first jaw forms a common passage. Bolts are inserted in the mounting apertures for securing the measuring element.

The present disclosure is directed, at least in part, to improving or overcoming one or more aspects of the prior art system.

### Brief Summary of the Invention

The present disclosure describes a jaw assembly for a demolition tool, the jaw assembly having a first jaw and a second jaw and comprising: at least one seating portion disposed on the second jaw, the at least one seating portion having a slot; and at least one work module removably mounted in the at least one seating portion, the at least one first work module comprising: a base; at least one tooth extending from the base; and a mounting element extending from the base in a direction opposite to the at least one tooth and engaging the at least one seating portion wherein a positioning element is interposed between the base and the mounting element, the positioning element being provided within the perimeter of the base to engage the inner walls of the seating portions.

### Brief Description of the Drawings

The foregoing and other features and advantages of the present disclosure will be more fully understood from the following description of various embodiments, when read together with the accompanying drawings, in which:
Fig. 1 is an isometric view of a jaw assembly according to the present disclosure;
Fig. 2 is an isometric view of the upper jaw of the jaw assembly of Fig. 1;
Fig. 3 is an isometric view from above of a first replaceable wear part according to the present disclosure;
Fig. 4 is an isometric view from below of the first replaceable wear part of Fig. 3;
Fig. 5 is an isometric view from above of a second replaceable wear part according to the present disclosure;
Fig. 6 is an isometric view from below of the second replaceable wear part of Fig. 5;
Fig. 7 is an isometric view of the lower jaw of the jaw assembly with the first replaceable wear parts mounted thereon according to the present disclosure;
Fig. 8 is a cross-section view through the lower jaw of the jaw assembly with the first and second replaceable wear parts mounted thereon according to the present disclosure;
Fig. 9 is an isometric view from above of a third replaceable wear part according to the present disclosure;
Fig. 10 is an isometric view from below of the third replaceable wear part of Fig. 9;
Fig. 11 is an isometric view of a fourth replaceable wear part according to the present disclosure;
Fig. 12 is an isometric view of the upper jaw of the jaw assembly with the third and fourth replaceable wear parts mounted thereon according to the present disclosure;
Fig. 13 is a side view of the upper jaw of the jaw assembly with the third and fourth replaceable wear parts mounted thereon according to the present disclosure; and
Fig. 14 is an isometric view of the jaw assembly with the first, second, third and fourth replaceable wear parts mounted thereon according to the present disclosure.

### Detailed Description

This disclosure generally relates to replaceable wear parts for a jaw set of a demolition tool.

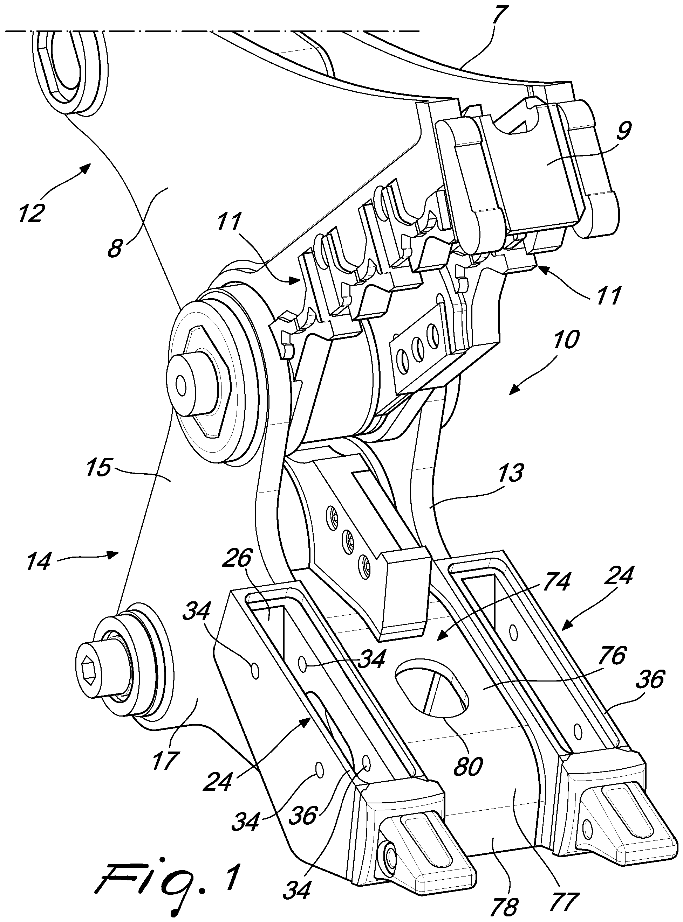

Fig. 1 illustrates a jaw assembly **10** having a first jaw **12** and a second jaw **14.** First jaw **12** and second jaw **14** may be elongated. The first jaw **12** and a second jaw **14** may be connected for mutual relative movement. The first jaw **12** and a second jaw **14** may be connected through a pivot connection at respective ends. First jaw **12** and second jaw **14** may have opposed faces onto which replaceable wear parts may be mounted.

In an embodiment, the first jaw **12** may be the upper jaw and the second jaw **14** may be the lower jaw.

The second jaw **14** may have a first arm **13** and a second arm **15.** Arms **13, 15** may be substantially T-shaped. Arms **13, 15** may have respective ends connected through the pivot connection. Opposite the ends connected through the pivot connection arms **13, 15** may be provided with a further connection point. Extending from the portion having the connections, first arm **13** and second arm **15** may have a mounting portion **17** configured for the mounting of the replaceable wear parts. The second jaw **14** may have a seating portion **24** and a support portion **74** for the mounting of the replaceable wear parts.

At least one seating portion **24** may be disposed on the second jaw **14.** The seating portion **24** may be positioned at an end of the arm **13, 15** opposite the end connected through the pivot connection. The seating portion **24** may be elongated. Seating portion **24** may be hollow with a side which is formed as a slot **26.** The slot **26** may be elongated and may be parallel to the longitudinal axis of the mounting portion **17.**

The seating portion **24** may comprise a ledge **36** which surrounds the slot **26.** The seating portion **24** may comprise holes **34** extending through opposite walls of the seating portion **24.** The holes **34** may detachably accommodate bolts for the mounting of the replaceable wear parts.

In an embodiment, two seating portions **24** may be disposed on the second jaw **14.** The seating portions **24** may be disposed at the ends of the arm **13, 15** opposite the ends connected through the pivot connection. The seating portions **24** may be positioned laterally on opposite sides of the second jaw **14.** A seating portion **24** may be connected to the first arm **13** and seating portion **24** may be connected to the second arm **15.** The seating portions **24** may be substantially parallel to each other.

The support portion **74** may be centrally disposed on the second jaw **14.** The support portion **74** may be positioned between the arms **13, 15.** The support portion **74** may be positioned between a pair of seating portions **24.**

The support portion **74** may have a first contact surface **76** and a second contact surface **78.** The first contact surface **76** may be inclined relative to the second contact surface **78.** A curved surface **77** may connect the first contact surface **76** and the second contact surface **78.**

The first contact surface **76** may lie on a first plane and the ledges **36** that surround the slots **26** of the pair of seating portions **24** may lie on a second plane. The first plane may be substantially parallel to the second plane. The first contact surface **76** may be spaced from the ledges **36** such that the second plane is superposed on the first plane.

The support portion **74** may have an aperture **80.** The aperture **80** may be disposed on the first contact surface **76.** Aperture **80** may be spaced equidistant from each seating portion **24.** The aperture **80** may have any suitable shape. In an embodiment, the aperture **80** may be circular. In an embodiment, the aperture **80** may be elongated with circular ends.

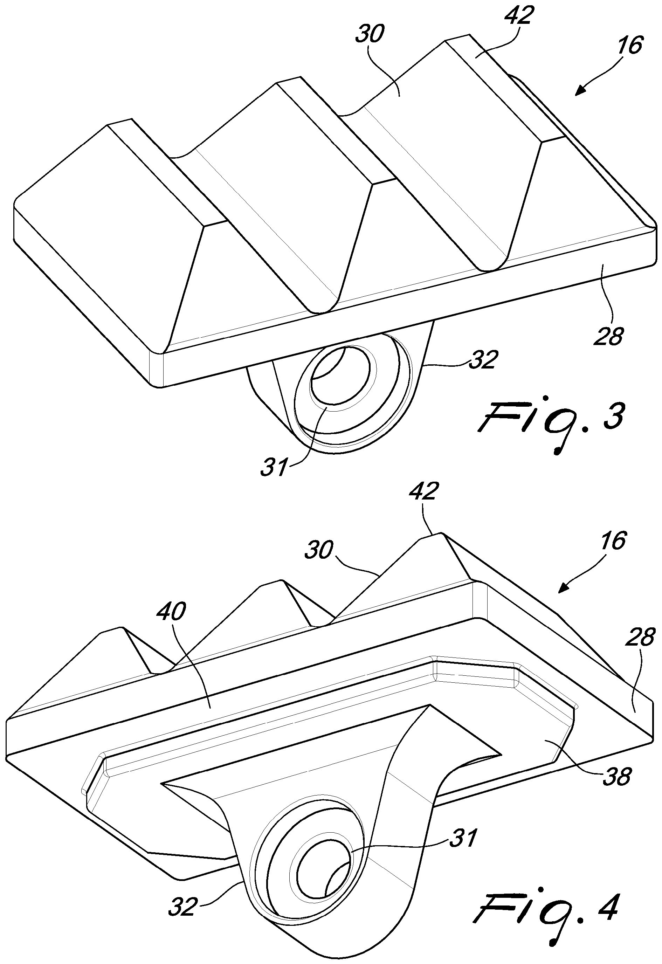

Figs. 3 and 4 illustrate a replaceable wear part which is a work module **16** that may be removably mounted to the jaw assembly **10** of a demolition tool. The work module **16** may be removably mounted to the second jaw **14.** The work module **16** may be removably mounted in the seating portion **24.**

The first work module **16** may comprise a base **28.** The base **28** may have a dimension to fit on the ledge **36** of the seating portion **24.** The base **28** may have a dimension to fit on the ledge **36** of the seating portion **24.** The base **28** may be rectangular in shape.

The base **28** may have a dimension such that the perimeter of the base **28** extends beyond the seating portion **24.** The base **28** may have a dimension such that the perimeter of the base **28** extends over the first contact surface **76.**

The work module **16** may have at least one tooth **30.** The tooth **30** may extend from the base **28.** The work module **16** may have a mounting element **32.** The mounting element **32** may extend from the base **28** in a direction opposite to the tooth **30.** The mounting element **32** may be configured for engaging the at least one seating portion **24.** The mounting element **32** may have a mounting hole **31.** With the work module **16** positioned at the seating portion **24** the mounting hole **31** may be aligned to the hole **34** disposed on the seating portion **24.**

The work module **16** may have a plurality of teeth **30.** The teeth may be mutually spaced along a longitudinal direction along the base **28.** The plurality of teeth **30** may extend laterally across the base **28.** The teeth **30** may be mutually substantially parallel. With the work module **16** positioned at the seating portion **24** the longitudinal axes of the teeth **30** may be normal to the longitudinal axis of the slot **26.**

Each tooth **30** may have slanted sides and may have a pyramidal shape. The slanted sides of each tooth may be angularly spaced. Each tooth **30** may have a truncated apex **42.**

The work module **16** may further comprise a positioning element **38.** The positioning element **38** may be interposed between the base **28** and the mounting element **32.** The positioning element **38** may be dimensioned to be provided within the perimeter of the base **28.** The perimeter of the positioning element **38** may be disposed on the base **28** and within the perimeter of the base **28.** In an embodiment, positioning element **38** may have corners thereof cut-away.

The work module **16** may further comprising a shoulder **40** provided between the perimeter of the positioning element **38** and the perimeter of the base element **28.** The shoulder **40** may encircle the positioning element **38.** The shoulder **40** may be configured to abut and rest on the ledge **36.** The shoulder **40** may extend beyond the seating portion **24.** The shoulder **40** may extend beyond the ledge **36.** The shoulder **40** may extend over the first contact surface **76.** The base **28** may have a dimension such that the shoulder **40** may extend beyond the ledge **36** and over the first contact surface **76.**

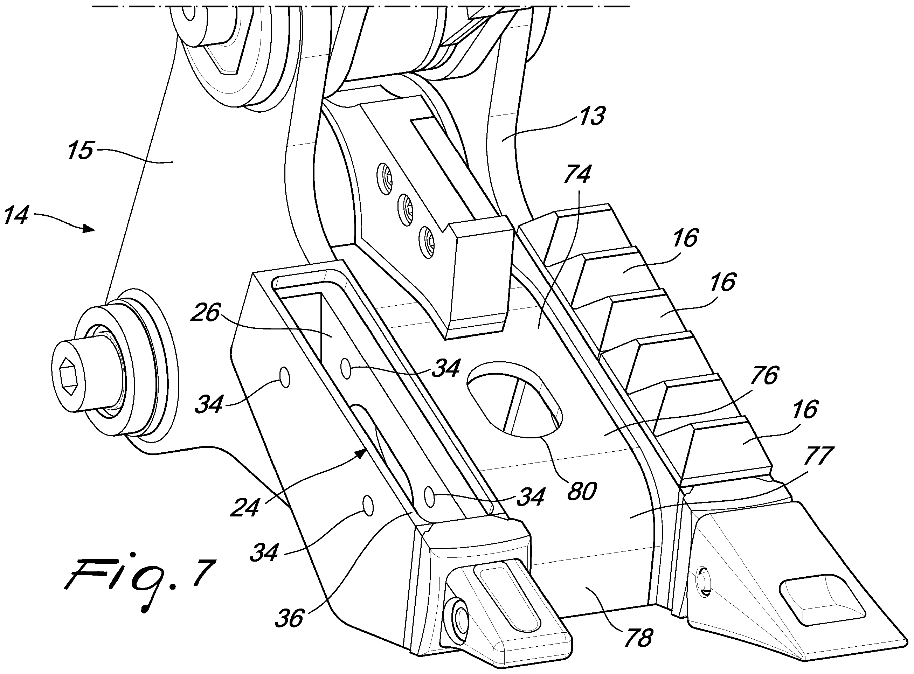

With reference to Fig. 7, two work modules **16** may be removably mounted to at least one seating portion **24.** The work modules **16** may be positioned end to end such that their respective longitudinal axes are coaxial. The bases **28** of the work modules **16** may be supported on the ledge **36.** A tooth **30** on each work module **16** may extend laterally across the respective bases **28.** The tooth **30** on one work module **16** may be substantially parallel to the tooth on the adjacent work module **16.**

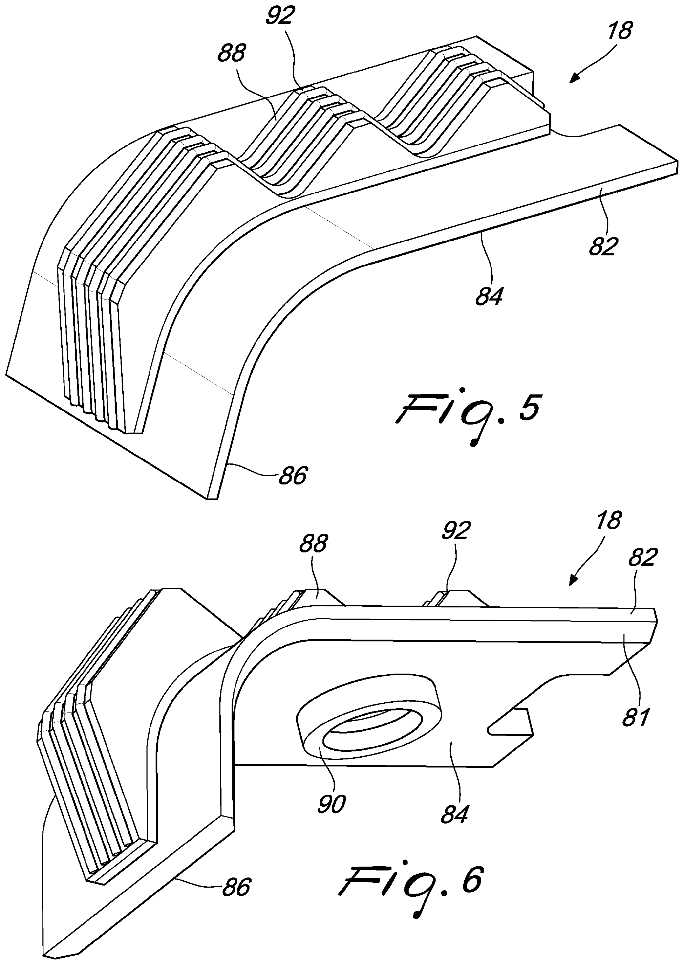

Figs. 5 and 6 illustrate a replaceable wear part which is a work plate **18** that may be removably mounted to the jaw assembly **10** of a demolition tool. The work plate **18** may be removably mounted to the second jaw **14.**

The work plate **18** may comprise a plate member **82** to abut and rest on the support portion **74.** The plate member **82** may have a first plate portion **84** and a second plate portion **86.** First plate portion **84** may be inclined relative to second plate portion **86.** A curved plate portion **85** may connect first plate portion **84** to second plate portion **86.** First plate portion **84** and second plate portion **86** may be supported by first contact surface **76** and second contact surface **78** respectively. The curved plate portion **85** may be supported by the curved surface **77.**

The work plate **18** may comprise at least one tooth member **88** extending from the first plate portion **84.** The work plate **18** may comprise a plurality of tooth members **88** extending from the first plate portion **84** and the second plate portion **86.** The tooth members **88** may be mutually spaced along a longitudinal direction along the plate member **82.** A tooth member **88** may extend from the first plate portion **84** to the second plate portion **86.** Each tooth **30** may have slanted sides and a substantially pyramidal shape. Each tooth member **88** may have a truncated apex **92.**

The work plate **18** may comprise a boss **90** extending from the first plate portion **84** in a direction opposite to the at least one tooth member **88.** The boss **90** may engage to the aperture **80.** The boss **90** may have a shape and a dimension to fit into the aperture **80.** The boss **90** may be circular.

The plate member **82** may have a cut portion **81** extending along the side edges thereof. The cut portion **81** may be positioned on the surface comprising the boss **90.**

A modular system for removable mounting of replaceable parts to a jaw assembly **10** of a demolition tool may be composed of the work module **16** and the work plate **18.** The work module **16** may have a base **28;** at least one tooth **30** extending from the base **28;** and a mounting element **32** extending from the base 28 in a direction opposite to the at least one tooth **30** and engaging an at least one seating portion **24** disposed on a second jaw **14** of the jaw assembly **10.** The work plate **18** may have a plate member **82** configured for abutting contact with a support portion **74** disposed on a second jaw **14** of the jaw assembly **10,** the plate member **82** having mutually inclined first plate portion **84** and second plate portion **86;** at least one tooth member **88** extending from the first plate portion **84;** and a boss **90** for engagement with an aperture **80** disposed on a first contact surface **76** of the support portion **74,** the boss **90** extending from the first plate portion **84** in a direction opposite to the at least one tooth member **88** on the first plate portion **84.** When the work module **16** and the work plate **18** are assembled on the second jaw **14** the bases **28** may extend over the plate member **82** to retain the work plate **18** on the second jaw **14.**

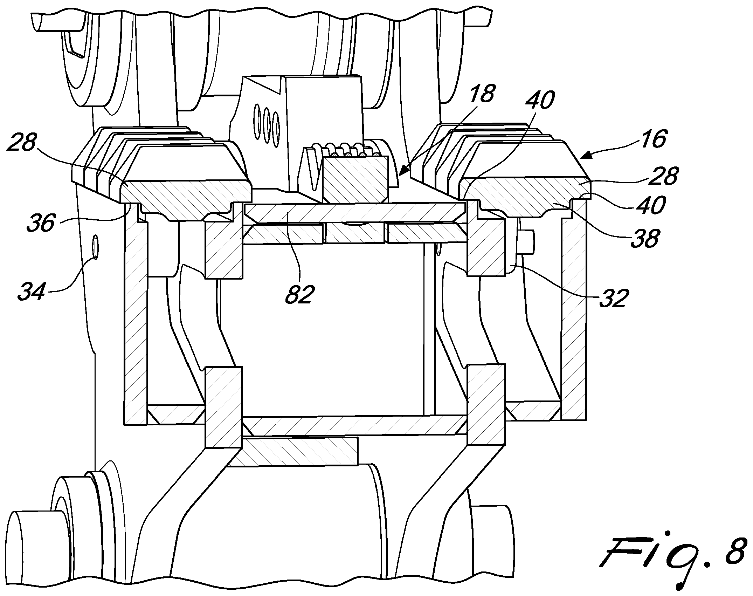

With reference to Fig. 8, bases **28** may extend over the plate member **82.** Bases **28** may extend past the ledges **36** away from the slot **26.** The shoulders **40** may extend over the plate member **82.** The bases **38** of each work module **16** may extend over opposite sides of the plate member **82.** The shoulders **40** of each work module **16** may extend over opposite sides of the plate member **82.**

The edges of the bases **28** may act as cantilevers extending over the plate member **82.** The base **28** of a work module **16** may extend over a side of the plate member **82.** The base **28** of a second work module **16,** located in the opposite seating portion **24** may extend over the opposite side of the plate member **82.** Vertical movement of the plate member **82** relative to the first contact surface **76** may be prevented by the edges of the bases **28** of the work modules **16.**

In an embodiment, the work module **16** may be mounted to the side of the seating portion **24** adjacent the first contact surface **76.** Bases **28** may be supported at the side of the seating portion **24** adjacent the first contact surface **76.**

The mounting of the modular system may involve mounting the work plate **18** onto the support portion and subsequently mounting at least one work module **16** at each seating portion **24.** The work modules **16** may hold the work plate **18** so as to prevent any movement in a direction away from the first plane. The work modules **16** may hold the work plate **18** so as to prevent any movement in a direction away from first contact surface **76.** The boss **90** may fit in the aperture **80** and prevent any movement of the plate member **82** in a direction substantially parallel to the first plane. The boss **90** may fit in the aperture **80** and prevent any movement of the plate member **82** in a direction substantially parallel to first contact surface **76.**

The work plate **18** may be lowered onto the support portion **74** till the first plate portion **84** and the second plate portion **86** may abut the first contact surface **76** and second contact surface **78** respectively and the boss **90** may fit into the aperture **80.**

The work modules **16** may then be inserted into the slot **26** till the shoulders **40** abut the ledges **36.** The positioning elements **38** may fit within the inner walls of the seating portions **24.** A pin may be inserted through the holes **34** and through the mounting holes **31.** The pin may be held in the holes by spring retainers. In an embodiment, a bolt may be inserted through the holes **34** and through the mounting holes **31.**

With reference to Fig. 1, the first jaw **12** may have a first plate **7** and a second plate **8** which have respective ends connected through the pivot connection. At the opposite ends of first plate **7** and second plate **8,** a front plate **9** may be connected to both plates **7, 8.** The first plate **7** and a second plate **8** may each have an active edge **11** configured for the mounting of the replaceable wear parts.

In an embodiment, the first jaw **12** may be composed of a single body that is provided with an active edge.

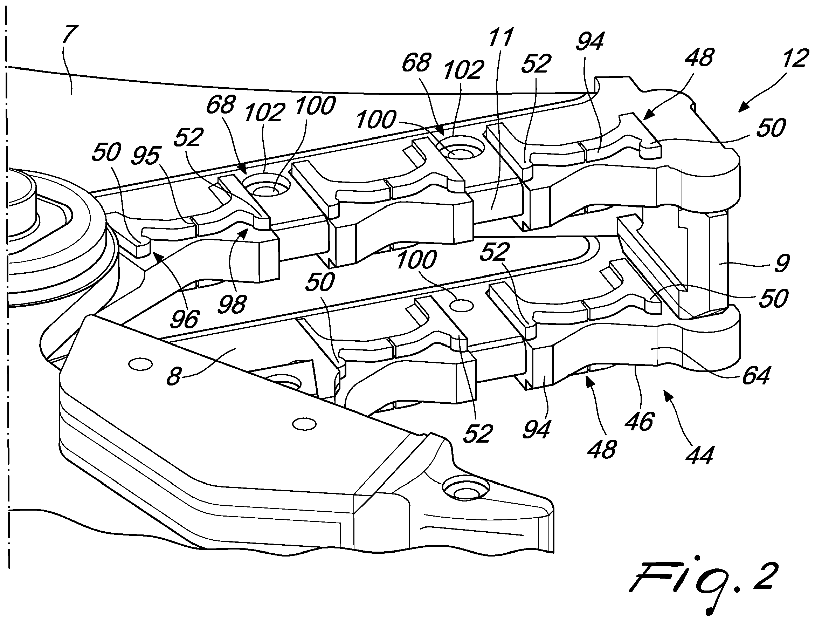

With reference to Fig. 2, the active edge **11** may have at least one first coupling portion **44.** The first coupling portion **44** may comprise an intermediate contact member **46** and a pair of side contact members **48** laterally extending from opposite sides of the intermediate contact member **46.**

The intermediate contact member **46** may be an extension from the active edge **11.** Intermediate contact member **46** may have width which corresponds to the width of the active edge **11.**

The intermediate contact member **46** hay have a contact surface **64.** Contact surface **64** may be spaced from the active edge **11.** Contact surface **64** may be substantially v-shaped with end portions being spaced further from the active edge **11** than a center portion.

In an embodiment, the end portions may have an abutment surface **94** which is parallel to the active edge **11.**

Side contact members **48** may protrude from the plates **7, 8** in a direction that is parallel to the active edge **11.** Each side contact members **48** may present an abutment surface **94** which is adjacent to the sides of the intermediate contact member **46.** Abutment surface **94** may be normal to the sides of the intermediate contact member **46.** The contact surface **64** may be spaced from the abutment surface **94.** Contact surface **64** and abutment surface **94** may face the same direction. A slot **95** may be provided in each side contact member **48.** Slot **95** may extend from the abutment surface **94** in a direction away from the contact surface **64.** Slot **95** may be located in the center of the abutment surface **94.**

Slot **95** may overcome dimension variations. First protrusion **50** and second protrusion **52** may be formed as plates and welded to opposite sides of the intermediate contact member **46.** First protrusion **50** and second protrusions **52** may be welded with a fixed distance to the bore **100** and normal to active edge **11.** The slot **95** may enable mounting of first protrusion **50** and second protrusions **52** may be welded without requiring them to be individually attached to the intermediate contact member **46.**

The abutment surface **94** may be substantially arcuate shaped. Abutment surface **94** may be formed such that the center is adjacent to the center portion of the contact surface **64.** The respective ends of the abutment surface **94** and the contact surface **64** may be nonadjacent.

Each side contact member **48** may comprise a first protrusion **50** spaced from a second protrusion **52.** The first protrusion **50** and second protrusion **52** may be located at opposite ends of the abutment surface **94.** Each first protrusion **50** and second protrusion **52** may define the limits of the side contact members **48.** First protrusion **50** and second protrusion **52** may be remote from the ends of the contact surface **64.** First protrusion **50** and second protrusion **52** may extend from the abutment surface **94** to the contact surface **64.**

In an embodiment, the free ends of each first protrusion **50** and second protrusion **52** may be in-line with active edge **11.**

The first protrusions **50** may have a first engagement surface **96** which faces the second engagement face **98** of the second protrusions **52.** The first engagement surface **96** and second engagement surface **98** may comprise curves. The first engagement surface **96** and the second engagement surface **98** may each have a convex curve and a concave curve. The concave curves may be proximate to the abutment surface **94.** The convex curves may be distal to the abutment surface **94.**

The first engagement surface **96** and the second engagement surface **98** may transit from convex curve to the concave curve from the free end to the abutment surface **94.** The degree of change from the convex curve to the concave curve is greater for the first engagement surface **96** relative to the degree of change from the convex curve to the concave curve for the second engagement surface **98.** The inflection of the convex curve to the concave curve on the first engagement surface **96** is greater relative to the inflection of the convex curve to the concave curve of the second engagement surface **98.**

The convex curve of the first engagement surface **96** has a higher curvature relative to the curvature of the convex curve of the second engagement surface **98.**

In an embodiment, convex and concave curves of first engagement surface **96** and second engagement surface **98** may have cross-sections defined by circular arcs.

The active edge **11** of each plate **7, 8** may have a plurality of first coupling portions **44.** The first coupling portions **44** may be mutually aligned longitudinally. The first coupling portions **44** may mutually spaced apart.

A first coupling portion **44** may be positioned adjacent to the front plate **9.** A first coupling portion **44** may be positioned adjacent to the ends of plate **7, 8** connected through the pivot connection. The side contact members **48** of the first coupling portion **44** adjacent to the front plate **9** may be mirror symmetrical with the side contact members **48** of the first coupling portion **44** adjacent to the pivot connection.

With reference to Fig. 2, the active edge **11** may have at least one second coupling portion **68.** The second coupling portion **68** may be adjacent to the at least one first coupling portion **44.** The second coupling portion **68** may be contiguous with the at least one first coupling portion **44.**

The second coupling portion **68** may comprise of through bore **100.** The bore **100** may extend through the plate **7, 8.** Bore **100** may be adapted to accommodate bolts for fixing a replaceable wear part. Bore **100** may be located on the plate **7, 8** spaced from the active edge **11.** Bore **100** may be provided transverse to the longitudinal axis of the plate **7, 8.** At a side of each plate **7, 8** bore **100** may open onto an opening **102.** The opening **102** may receive the spring retainers. The pin may be held in the bore **100** by spring retainers. In an embodiment, opening **102** may receive the head of a bolt which is inserted into the bore **100.**

The active edge **11** of each plate **7, 8** may have a plurality of second coupling portions **68.** The second coupling portions **68** may be mutually aligned longitudinally. The second coupling portions **68** may mutually spaced apart.

The second coupling portions **68** may be interspersed between the first coupling portions **44.** The first coupling portions **44** and the second coupling portions **68** may be mutually aligned longitudinally on the active edge **11.** The second coupling portions **68** may be bordered by the side contact members **48** of alternate first coupling portions **44.**

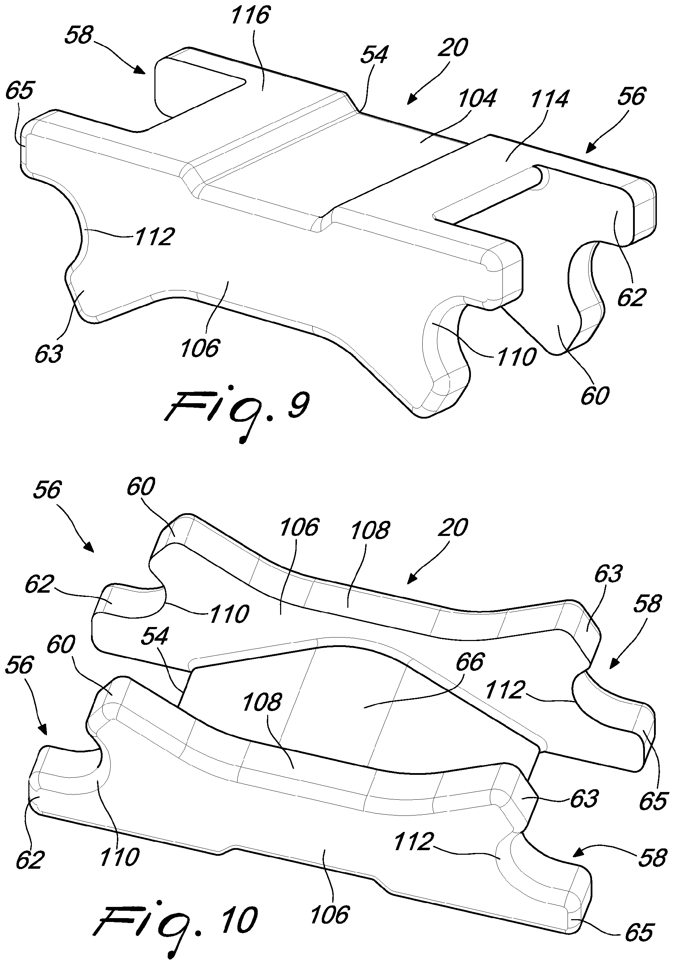

Figs. 9 and 10 illustrate a replaceable wear part which is a wear plate **20** that may be removably mounted to the jaw assembly **10** of a demolition tool. The wear plate **20** may comprise a body element **54** that is configured to saddle the first coupling portion **44.** The body element **54** may be substantially u-shaped.

Body element **54** may have a central panel **104** connected to a pair of side panels **106.** Central panel **104** may be normal to the side panels **106.** The central panel **104** may have a notch orientated transverse to the longitudinal axis of the central panel **104.** With the wear plate **20** mounted to the first coupling portion **44,** the central panel **104** may rest on the contact surface **64.** The central panel **104** may have a contact face **66** which is complementarily shaped to the contact surface **64.** The contact face **66** may be substantially v-shaped to fit into the contact surface. The center protrusion of the contact face **66** may fit into the center depression of the contact surface **64.** The complementarily shaped contact surfaces **64, 66** may limit the axial movement of the wear plate **20** on the first coupling portion **44.**

Each side panels **106** may have an abutment edge **108** located opposite the edge connected to the central panel **104.** The abutment edges **108** may be shaped to fit onto the abutment surface **94** of the side contact member **48.**

A pair of first engagement elements **56** may extend from an end of the body element **54** for engaging to first protrusions **50** provided on the at least one first coupling portion **44.** First engagement elements **56** may extend in a direction substantially away from the central panel **104.** The pair of first engagement elements **56** may be spaced apart on the body element **54.** The pair of first engagement elements **56** may be mutually substantially parallel. The pair of first engagement elements **56** may be mirror symmetrical. First engagement elements **56** may be disposed on the side panels **106** and on the central panel **104.**

Each first engagement element **56** may comprise a pair of bifurcate fingers **60, 62.** First fingers **60** may be angularly spaced relative to second fingers **62.** First fingers **60** may have an angular spacing of 10° to 50° relative to second fingers **62.** Preferably, first fingers **60** may have an angular spacing of 15° to 35° relative to second fingers **62.** Preferably, first fingers **60** may have an angular spacing of 20° to 40° relative to second fingers **62.** Preferably, first fingers **60** may have an angular spacing of 25° to 45° relative to second fingers **62.** Preferably, first fingers **60** may have an angular spacing of 30° relative to second fingers **62.**

With an angular spacing of 30° the wear plate **20** may be retained in engagement to first protrusions **50** and to prevent the fingers **60, 62** from becoming to long and small which may increase the risk of breaking. With an angle of more than 50° the wear plate **20** may not be retained in engagement to first protrusions **50.** A first groove **110** may be formed between each pair of bifurcate fingers **60, 62.** First grooves **110** may have cross-sections defined by circular arcs. The circular arcs may be opposite the respective openings. First grooves **110** may receive first protrusions **50.** First grooves **110** may have dimensions and shapes to accommodate the first protrusions **50.**

Each first finger **60** may be provided on the side panel **106.** First finger **60** may be inclined relative to central panel **106.** The longitudinal axis of first finger **60** may be inclined relative to the longitudinal axis of central panel **104.** The longitudinal axis of first finger **60** may be inclined relative to the longitudinal axis of second finger **62.** The side of first finger **60** opposite the side bordering the first groove **110** may form the side of the abutment edge **108.**

Each second finger **62** may be disposed at the connection of side panel **106** and central panel **104.** Second finger **62** may partially extend from side panel **106** and may partially extend from central panel **104.** The longitudinal axis of second finger **62** may be parallel to the longitudinal axis of central panel **104.**

The sides of second fingers **62** opposite the sides bordering the first grooves **110** may be planar with a surface of the central panel **104.** A first retainment zone **114** may be formed by a surface at the end portion of the central panel **104** and the side of second finger **62** which are mutually planar. The first retainment zone **114** may be bordered by the notch.

A pair of second engagement elements **58** may extend from an end of the body element **54** for engaging to second protrusions **52** provided on the at least one first coupling portion **44.** Second engagement elements **58** may extend in a direction substantially away from the central panel **104.** Second engagement elements **58** may extend in a direction opposite to the direction of extension of the first engagement elements **56.** The pair of second engagement elements **58** may be spaced apart on the body element **54.** The pair of second engagement elements **58** may be mutually substantially parallel. The pair of second engagement elements **58** may be mirror symmetrical. Second engagement elements **58** may be disposed on the side panels **106** and on the central panel **104.**

Each second engagement element **58** may comprise a pair of bifurcate branches **63, 65.** First branches **63** may be angularly spaced relative to second branches **65.** First branches **63** may have an angular spacing of 10° to 50° relative to second branches **65.** Preferably, first branches **63** may have an angular spacing of 15° to 35° relative to second branches **65.** Preferably, first branches **63** may have an angular spacing of 20° to 40° relative to second branches **65.** Preferably, first branches **63** may have an angular spacing of 25° to 45° relative to second branches **65.** Preferably, first branches **63** may have an angular spacing of 30° relative to second branches **65.**

With an angular spacing of 30° the wear plate **20** may be retained in engagement to second protrusions **52** and to prevent the branches **63, 65** from becoming to long and small which may increase the risk of breaking. With an angle of more than 50° the wear plate **20** may not be retained in engagement to second protrusions **52.**

The bifurcate fingers **60, 62** may have the same angular spacing as the bifurcate branches **63, 65.** In an embodiment, the bifurcate fingers **60, 62** may have a smaller angular spacing than the bifurcate branches **63, 65.**

A second groove **112** may be formed between each pair of bifurcate branches **63, 65.** Second grooves **112** may have cross-sections defined by circular arcs. The circular arcs may be opposite the respective openings. Second grooves **112** may receive second protrusions **52.** Second grooves **112** may have dimensions and shapes to accommodate the second protrusions **52.**

Second grooves **112** may have the same dimension as first grooves **110.** Second grooves **112** may have the same diameter as first grooves **110.** In an embodiment, second grooves **112** may have a greater dimension relative to first grooves **110.** Second grooves **112** may have a diameter that is greater relative to the diameter of first grooves **110.**

Each first branch **63** may be provided on the side panel **106.** First branch **63** may be inclined relative to central panel **106.** The longitudinal axis of first branch **63** may be inclined relative to the longitudinal axis of central panel **106.** The longitudinal axis of first branch **63** may be inclined relative to the longitudinal axis of second finger **65.** The side of first branch **63** opposite the side bordering the may form the first groove **110** may form the side of the abutment edge **108.**

Each second branch **65** may be disposed at the connection of side panel **106** and central panel **104.** Second branch **65** may partially extend from side panel **106** and may partially extend from central panel **104.** The longitudinal axis of second branch **65** may be parallel to the longitudinal axis of central panel **106.**

The sides of second branches **65** opposite the sides bordering the first grooves **110** may be planar with a surface of the central panel **104.** A second retainment zone **116** may be formed by a surface at the end portion of the central panel **104** and the side of second branch **65** which are mutually planar. The second retainment zone **116** may be bordered by the notch. Second retainment zone **116** may be formed opposite the first retainment zone **114.**

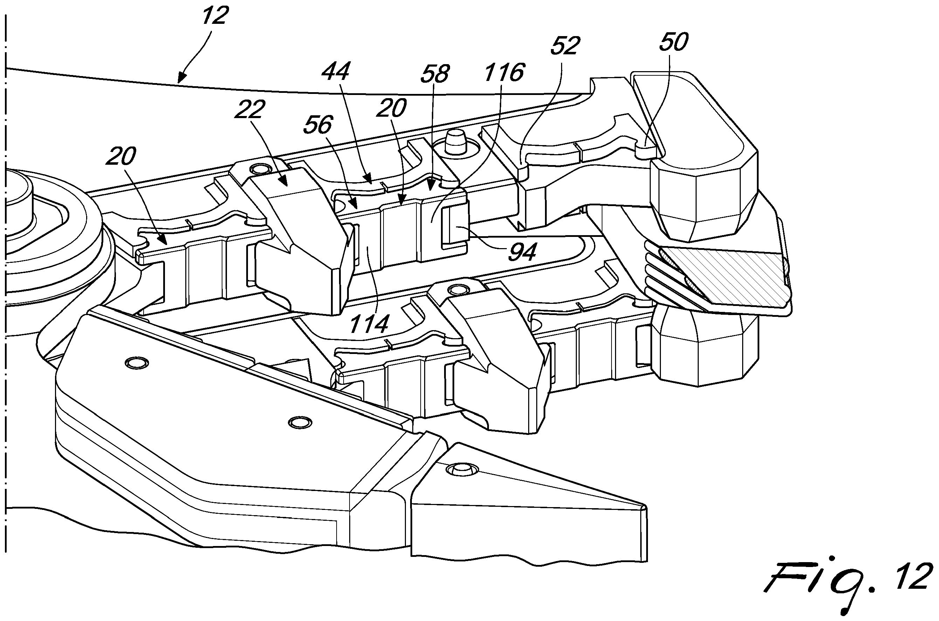

Fig. 12 illustrates the wear plate **20** mounted on the first coupling portion **44.** First engagement elements **56** and second engagement elements **58** may extend along the side of the intermediate contact member **46.** The first retainment zone **114** may be planar with an abutment surface **94** of the intermediate contact member **46.** The second retainment zone **116** may be planar with an abutment surface **94** of the intermediate contact member **46.**

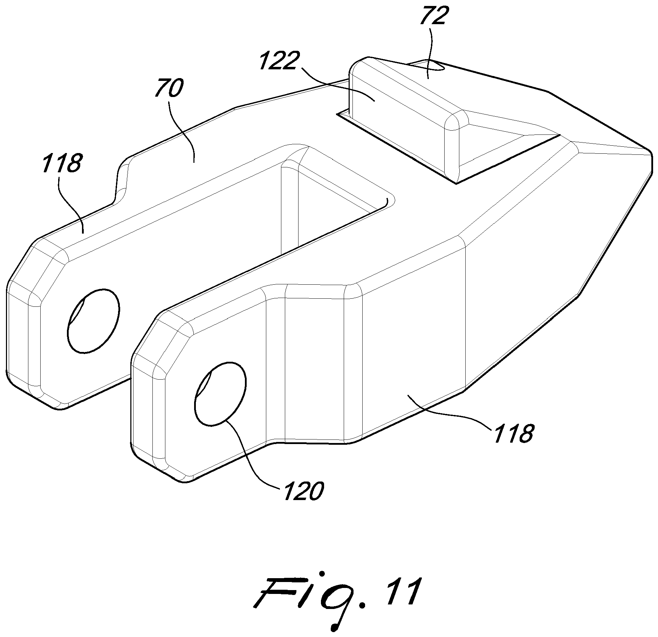

Fig. 11 illustrates a replaceable wear part which is an active module **22** that may be removably mounted to the jaw assembly **10** of a demolition tool. The active module **22** may comprise a body member **70** that is configured to be mountable to the at least one second coupling portion **68.** Body member **70** may be substantially U-shaped to straddle the intermediate contact member **46.** Legs **118** may extend from the body member **70.** Legs **118** may extend longitudinally from the body member **70.** Legs **118** may be provided with through bores **120** for receiving pins for coupling to the second coupling portion **68.**

Active module **22** may have at least one brace **72** disposed on the body member **70.** Brace **72** may protrude laterally from the body member **70.** Brace **72** may be disposed on the member **70** spaced away from the legs **118.** Brace **70** may have a substantially triangular shape. Brace **70** may have a triangular cross-section.

In an embodiment, brace **70** may be a planar extension. Brace **70** may have a rectangular cross-section.

Brace **72** may have a retainment face **122** which faces the direction of extension of legs **118.** Retainment face **122** may be planar. Retainment face **122** may have a dimension such that with the active module **22** mounted at the second coupling portion **68** the brace **72** may extend over the wear plate **20.** Brace **72** may extend over the second engagement elements **58.** Brace **72** may extend over the first engagement elements **56.**

With reference to Fig. 12, brace **72** may extend over the second engagement elements **58.** Brace **72** may extend over the first engagement elements **56.** Retainment face **122** may contact the abutment surface **94** and the first retainment zone **114.** Retainment face **122** may contact the abutment surface **94** and the second retainment zone **116.**

The retainment face **112** may engage the second engagement elements **58** to retain the wear plate **20** on the first jaw **12.** The retainment face **112** may engage the second retainment zone **116** to retain the wear plate **20** on the first jaw **12.** The retainment face **112** may engage the first engagement elements **56** to retain the wear plate **20** on the first jaw **12.** The retainment face **112** may engage the first retainment zone **114** to retain the wear plate **20** on the first jaw **12.**

In an embodiment, a pair of braces **72** may be provided on opposite sides of the body member **70.** The braces **72** may extend from the body member **70** in opposite directions. The braces **72** may be configured to extend over the first engagement elements **56** and the second engagement elements **58** of alternate wear plates **20.** The braces **72** may be configured to extend over the second engagement elements **58** of alternate wear plates **20.**

A modular system for removable mounting of replaceable parts to a jaw assembly **10** of a demolition tool may be composed of the wear plate **20** and the active module **22.** The wear plate **20** may comprise a body element **54** configured to saddle an at least one first coupling portion **44** disposed on a first jaw **12** of the jaw assembly 10; a pair of spaced apart first engagement elements **56** extending from an end of the body element **54** for engaging to first protrusions **50** provided on the at least one first coupling portion **44;** and a pair of spaced apart second engagement elements **58** extending longitudinally from an opposite end of the body element **54** for engaging to the second protrusions **52** provided on the at least one first coupling portion **44.** The active module **22** may comprise a body member **70** configured to be mountable to the at least one second coupling portion **68** disposed on a first jaw **12** adjacent to the at least one first coupling portion **44;** at least one brace **72** disposed on a side of the body member **70** and configured to extend over the second engagement elements **58.** When the wear plate **20** and the active module **22** are assembled on the first jaw **24** a brace **72** may extend over the second engagement elements **58** to retain the wear plate **20** on the first jaw **12.**

In an embodiment, a pair of braces **72** may be disposed on opposite sides of the body member **70.** The braces **72** may be configured to extend over the first engagement elements **56** and the second engagement elements **58** of alternate wear plates **20.** The braces **72** may be configured to extend over the second engagement elements **58** of alternate wear plates **20.**

The mounting of the modular system may involve mounting the wear plate **20** onto the first coupling portion **44** and subsequently mounting at least one active module **22** at second coupling portion **68.**

The wear plate **20** may be mounted on the first coupling portion **44.** Wear plate **20** may be positioned such that the first engagement elements **56** may be pointed towards the firsts protrusions **50.** Wear plate **20** is moved towards first coupling portion **44** and the first engagement elements **56** contact with the first protrusions **50.** The first fingers **60** may contact the concave curves of the first engagement surfaces **96.** The convex curves of first engagement surfaces **96** may fit into the first grooves **110.** The second fingers **62** may engage the free ends of the first protrusions **50.** Side panels **106** may contact the sides of the intermediate contact member **46.**

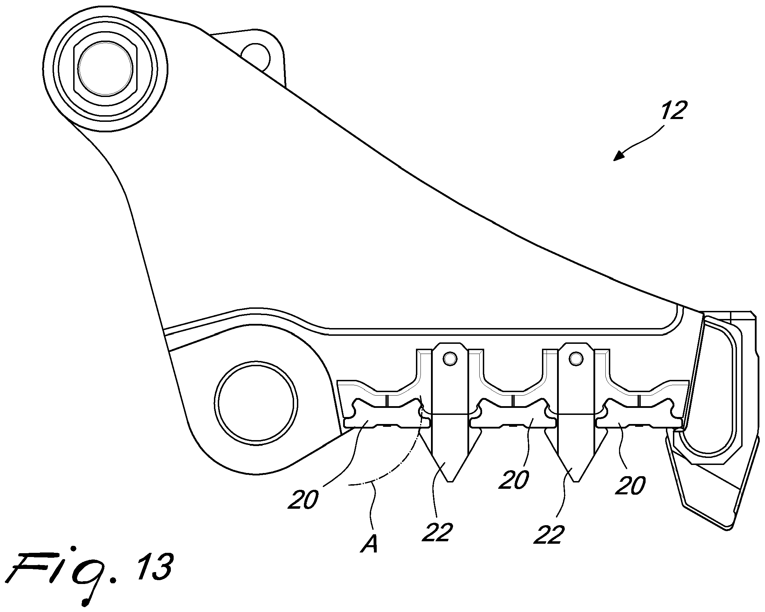

Once, the first engagement elements **56** are engaged with the firsts protrusions **50,** the wear plate **20** may be rotated onto the first coupling portion **44** along the line A as illustrated in Fig. 13. Line A may be concentric with the convex curve of first engagement surfaces **96.** Wear plate **20** may be rotated away from the first coupling portion **44** along the line A as illustrated in Fig. 13 when being removed therefrom.

The convex curves may rotate in the first grooves **110** relative to the side contact members **48.** The first fingers **60** may rotate in concave curves of the first engagement surfaces **96** side contact members **48.** Side panels **106** may slide against the sides of the intermediate contact member **46.**

As wear plate **20** rotates about the convex curves of the first engagement surfaces **96** of the first protrusion **50** the second engagement elements **58** move into contact with the second engagement surfaces **98** of the second protrusions **52.** The first branches **63** may slide past the convex curves of the second engagement surfaces **98** to contact the concave curves thereof. The second branches **65** may move into contact the free ends of the second protrusions **52.** The second branches **65** may contact and rest on the convex curves of the second engagement surfaces **98.** The abutment edges **108** of the side panels **106** move into contact with the respective abutment surfaces **94** of the side contact members **48.** The contact face **66** of the wear plate **20** may fit into the contact surface **64** of the intermediate contact member **46.**

After, the wear plate **20** is mounted at the first coupling portion **44,** the active module **22** is moved into the second coupling portion **68.** The body member **70** straddles the active edge **11** and the legs **118** are positioned such that the bores **120** are aligned with the bores **100.** Bolts may be inserted through bores **120** and bores **100** so as to hold the active module **22** at the second coupling portion **68.** With the active module **22** mounted at least one brace **72** may be disposed on a side of the body member **70** and may extend over the second engagement elements **58.**

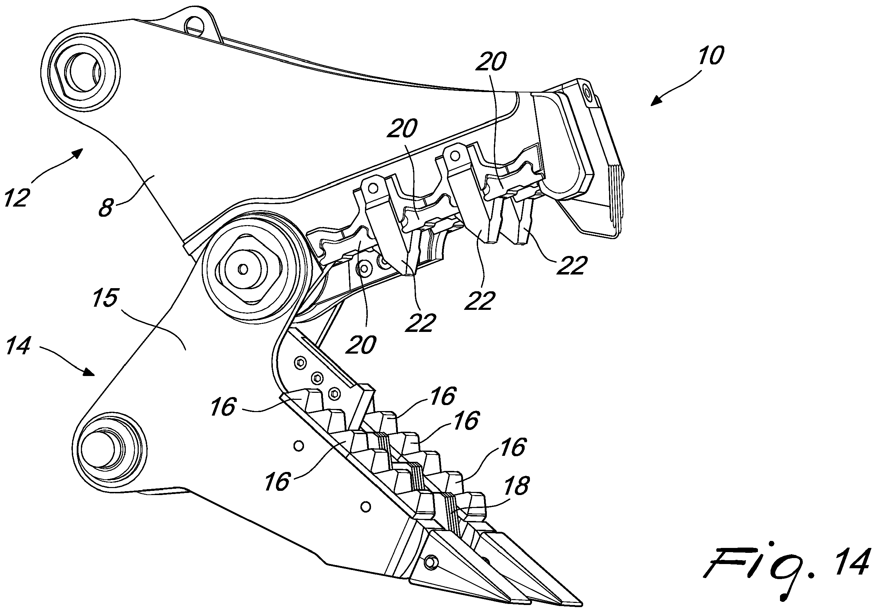

Fig. 14 illustrates a jaw assembly **10** having mounted thereon the replaceable wear parts represented by the work module **16,** the work plate **18,** the wear plates **20** and the active modules **22.**

The skilled person would appreciate that foregoing embodiments may be modified or combined to obtain the jaw assembly **10** and the replaceable wear parts **16, 18, 20, 22** of the present disclosure.

### Industrial Applicability

This disclosure describes a jaw assembly **10** and replaceable wear parts. The replaceable wear parts may be mounted to the jaw assembly **10** of a demolition tool such as multiprocessors, pulverizers, crushers and other demolition tools that may have a jawset or grapple tine which have closing movements. The replaceable wear parts may be mounted to the corresponding support portions of the jaw assembly **10.** The replaceable wear parts may shield the jaw assembly **10** from wear during demolition operations such as crushing or cutting of materials. The replaceable wear parts may be made of materials suitable for the crushing or cutting operations.

The replaceable wear parts may be easily and efficiently mounted on and dismounted from jaw assembly. Once the replaceable wear parts are spent due to operation of the demolition tool, the modules may be easily replaced with a substitute replaceable modules.

The replaceable wear parts **18, 20** may be removably mounted on the jaw assembly **10** without the use of bolts or pins.

Accordingly, this disclosure includes all modifications and equivalents of the subject matter recited in the claims appended hereto as permitted by applicable law. Moreover, any combination of the above-described elements in all possible variations thereof is encompassed by the disclosure unless otherwise indicated herein.

Where technical features mentioned in any claim are followed by references signs, the reference signs have been included for the sole purpose of increasing the intelligibility of the claims and accordingly, neither the reference signs nor their absence have any limiting effect on the technical features as described above or on the scope of any claim elements.

One skilled in the art will realise the disclosure may be embodied in other specific forms without departing from the disclosure or essential characteristics thereof. The foregoing embodiments are therefore to be considered in all respects illustrative rather than limiting of the disclosure described herein. Scope of the invention is thus indicated by the appended claims, rather than the foregoing description, and all changes that come within the meaning and range of equivalence of the claims are therefore intended to be embraced therein.

## Claims

1. A jaw assembly (10) for a demolition tool, the jaw assembly (10) having a first jaw (12) and a second jaw (14) and comprising:
at least one seating portion (24) disposed on the second jaw (14), the at least one seating portion (24) having a slot (26); and
at least one work module (16) removably mounted in the at least one seating portion (24), the at least one first work module (16) comprising:
a base (28);
at least one tooth (30) extending from the base (28); and
a mounting element (32) extending from the base (28) in a direction opposite to the at least one tooth (30) and engaging the at least one seating portion (24), **characterised in that** a positioning element (38) is interposed between the base (28) and the mounting element (32), the positioning element (38) being provided within the perimeter of the base (28) to engage the inner walls of the seating portions (24).

2. The jaw assembly (10) of claim 1 further comprising holes (34) extending through opposite walls of the at least one seating portion (24) wherein the holes (34) detachably accommodate pins connected to the mounting element (32).

3. The jaw assembly (10) of claim 1 or 2 wherein two work modules (16) are removably mounted in the at least one seating portion (24).

4. The jaw assembly (10) of claim 3 wherein the tooth (30) on each work module (16) extends laterally across the respective bases (28) and the tooth (30) on each work module (16) are mutually substantially parallel.

5. The jaw assembly (10) of claim 3 wherein at least one seating portion (24) has a ledge (36) surrounding the slot (26) and the bases (28) of the work modules (16) are supported on the ledge (36).

6. The jaw assembly (10) of claim 1, 2, 3, 4 or 5 comprising two seating portions (24).

7. The jaw assembly (10) of claim 6 wherein the seating portions (24) are positioned laterally on opposite sides of the second jaw (14).

8. The jaw assembly (10) of claim 7 wherein the seating portions (24) are mutually substantially parallel.

9. The jaw assembly (10) of any one of preceding claims wherein the work module (16) comprises a plurality of teeth (30) mutually spaced along a longitudinal direction along the base (28).

10. The jaw assembly (10) of claim 9 wherein the plurality of teeth (30) extends laterally across the base (28) and the teeth (30) are mutually substantially parallel.

11. The jaw assembly (10) of any one of preceding claims wherein the base (28) has a dimension such that the perimeter of the base (28) extends beyond the at least one seating portion (24).

12. The jaw assembly (10) of any one of preceding claims wherein the work module (16) further comprises a shoulder (40) provided between the perimeter of the positioning element (38) and the perimeter of the base (28) wherein the shoulder (40) encircles the positioning element (38).

13. The jaw assembly (10) of claim 12 wherein the shoulder (40) extends beyond the at least one seating portion (24).

## Patentansprüche

1. Backenanordnung (10) für ein Abbruchwerkzeug, wobei die Backenanordnung (10) eine erste Backe (12) und eine zweite Backe (14) aufweist und umfasst:
mindestens einen Sitzabschnitt (24), der an der zweiten Backe (14) angeordnet ist, wobei der mindestens eine Sitzabschnitt (24) einen Schlitz (26) aufweist; und
mindestens ein Arbeitsmodul (16), das in dem mindestens einen Sitzabschnitt (24) abnehmbar montiert ist, wobei das mindestens eine erste Arbeitsmodul (16) umfasst:
eine Basis (28);
mindestens einen Zahn (30), der sich von der Basis (28) erstreckt; und
ein Montageelement (32), das sich von der Basis (28) in einer dem mindestens einen Zahn (30) entgegengesetzten Richtung erstreckt und mit dem mindestens einen Sitzabschnitt (24) in Eingriff steht, **dadurch gekennzeichnet, dass** ein Positionierungselement (38) zwischen der Basis (28) und dem Montagelement (32) angeordnet ist, wobei das Positionierungselement (38) innerhalb des Umfangs der Basis (28) bereitgestellt ist, um mit den Innenwänden der Sitzabschnitte (24) in Eingriff zu kommen.

2. Backenanordnung (10) nach Anspruch 1, weiter umfassend Löcher (34), die sich durch gegenüberliegende Wände des mindestens einen Sitzabschnitts (24) erstrecken, wobei die Löcher (34) lösbar Stifte aufnehmen, die mit dem Befestigungselement (32) verbunden sind.

3. Backenanordnung (10) nach Anspruch 1 oder 2, wobei zwei Arbeitsmodule (16) in dem mindestens einem Sitzabschnitt (24) entfernbar montiert sind.

4. Backenanordnung (10) nach Anspruch 3, wobei sich der Zahn (30) auf jedem Arbeitsmodul (16) lateral quer über die jeweiligen Basen (28) erstreckt und die Zähne (30) auf jedem Arbeitsmodul (16) im Wesentlichen parallel zueinander sind.

5. Backenanordnung (10) nach Anspruch 3, wobei mindestens ein Sitzabschnitt (24) einen Vorsprung (36) aufweist, der den Schlitz (26) umgibt, und die Basen (28) der Arbeitsmodule (16) auf dem Vorsprung (36) getragen werden.

6. Die Backenanordnung (10) nach Anspruch 1, 2, 3, 4 oder 5, umfassend zwei Sitzabschnitte (24).

7. Backenanordnung (10) nach Anspruch 6, wobei die Sitzabschnitte (24) lateral auf gegenüberliegenden Seiten der zweiten Backe (14) positioniert sind.

8. Backenanordnung (10) nach Anspruch 7, wobei die Sitzabschnitte (24) im Wesentlichen parallel zueinander sind.

9. Backenanordnung (10) nach einem der vorstehenden Ansprüche, wobei das Arbeitsmodul (16) eine Vielzahl von Zähnen (30) aufweist, die entlang einer Längsrichtung entlang der Basis (28) voneinander beabstandet sind.

10. Backenanordnung (10) nach Anspruch 9, wobei sich die Vielzahl Zähne (30) lateral quer über die Basis (28) erstrecken und die Zähne (30) im Wesentlichen parallel zueinander sind.

11. Backenanordnung (10) nach einem der vorstehenden Ansprüche, wobei die Basis (28) derart eine Abmessung aufweist, dass sich der Umfang der Basis (28) über den mindestens einen Sitzabschnitt (24) hinaus erstreckt.

12. Backenanordnung (10) nach einem der vorstehenden Ansprüche, weiter umfassend eine Schulter (40), die zwischen dem Umfang des Positionierungselements (38) und dem Umfang der Basis (28) bereitgestellt ist, wobei die Schulter (40) das Positionierungselement (38) umkreist.

13. Backenanordnung (10) nach Anspruch 12, wobei sich die Schulter (40) über den mindestens einen Sitzabschnitt (24) hinaus erstreckt.

## Revendications

1. Ensemble de mâchoires (10) pour un outil de démolition, l'ensemble de mâchoires (10) ayant une première mâchoire (12) et une seconde mâchoire (14) et comprenant :
au moins une partie de siège (24) disposée sur la seconde mâchoire (14), la au moins une partie de siège (24) présentant une fente (26) ; et
au moins un module de travail (16) monté de manière amovible dans la au moins une partie de siège (24), le au moins un premier module de travail (16) comprenant :
une base (28) ;
au moins une dent (30) s'étendant de la base (28) ; et
un élément de montage (32) s'étendant de la base (28) dans un sens opposé à celui de la au moins une dent (30) et engageant la au moins une partie de siège (24), **caractérisé en ce qu'**un élément de positionnement (38) est intercalé entre la base (28) et l'élément de montage (32), l'élément de positionnement (38) étant disposé dans le périmètre de la base (28) pour engager les parois internes des parties de siège (24).

2. Ensemble de mâchoires (10) selon la revendication 1, comprenant en outre des trous (34) s'étendant à travers des parois opposées de la au moins une partie de siège (24), dans lequel les trous (34) reçoivent de manière détachable des broches raccordées à l'élément de montage (32).

3. Ensemble de mâchoires (10) selon la revendication 1 ou 2, dans lequel deux modules de travail (16) sont montés de manière amovible dans la au moins une partie de siège (24).

4. Ensemble de mâchoires (10) selon la revendication 3, dans lequel la dent (30) sur chaque module de travail (16) s'étend latéralement en travers des bases respectives (28) et les dents (30) sur chaque module de travail (16) sont sensiblement parallèles l'une à l'autre.

5. Ensemble de mâchoires (10) selon la revendication 3, dans lequel au moins une partie de siège (24) présente une moulure (36) entourant la fente (26) et les bases (28) des modules de travail (16) sont supportées sur la moulure (36).

6. Ensemble de mâchoires (10) selon la revendication 1, 2, 3, 4 ou 5, comprenant deux parties de siège (24).

7. Ensemble de mâchoires (10) selon la revendication 6, dans lequel les parties de siège (24) sont positionnées latéralement sur les côtés opposés de la seconde mâchoire (14).

8. Ensemble de mâchoires (10) selon la revendication 7, dans lequel les parties de siège (24) sont sensiblement parallèles l'une à l'autre.

9. Ensemble de mâchoires (10) selon l'une quelconque des revendications précédentes, dans lequel le module de travail (16) comprend une pluralité de dents (30) mutuellement espacées dans la direction longitudinale le long de la base (28).

10. Ensemble de mâchoires (10) selon la revendication 9, dans lequel la pluralité de dents (30) s'étend latéralement en travers de la base (28) et les dents (30) sont sensiblement parallèles l'une à l'autre.

11. Ensemble de mâchoires (10) selon l'une quelconque des revendications précédentes, dans lequel la base (28) a une dimension telle que le périmètre de la base (28) s'étende au-delà de la au moins une partie de siège (24).

12. Ensemble de mâchoires (10) selon l'une quelconque des revendications précédentes, dans lequel le module de travail (16) comprend en outre un épaulement (40) aménagé entre le périmètre de l'élément de positionnement (38) et le périmètre de la base (28), dans lequel l'épaulement (40) enserre l'élément de positionnement (38).

13. Ensemble de mâchoires (10) selon la revendication 12, dans lequel l'épaulement (40) s'étend au-delà de la au moins une partie de siège (24).
